# EUROPEAN PATENT APPLICATION

(11) **EP 1 923 846 A1**
(43) Date of publication of application: **21.05.2008**
(21) Application number: 07120249.3
(22) Date of filing: 08.11.2007
(51) Int. Cl.: G07F 9/02, G07F 11/00

(54) **Vending machine**

(30) Priority: 14.11.2006 JP 2006307673
(71) Applicant: Sanden Corporation, Isesaki-shi, Gunma 372-8502 (JP)
(72) Inventor: Satou, Masaaki, c/o Sanden Corporation, Isesaki-shi Gunma 372-8502 (JP); Nishio, Junichi, c/o Sanden Corporation, Isesaki-shi Gunma 372-8502 (JP)
(74) Representative: Haley, Stephen

(57) **Abstract**

A controller (100) of a vending machine (1) includes a timer (130) for measuring current time and a memory (120) for storing a usual product price (122) for each product. Furthermore, the controller (100), when current time of product sales is within a predetermined time period, discounts a predetermined amount from the usual product price (122) for product sales control.

## Description

### Background of the invention

### Field of the invention

The present invention relates to automatic vending machines for selling stored products, and particularly to discount control for discounting prices of products and selling the products during predetermined time periods.

### Description of the related art

Conventionally, as this kind of machine, there has been known an automatic vending machine described in Japanese Patent Publication 2003-58941. This automatic vending machine stores the price of each product in a predetermined area of a memory in a controller thereof. The storage area of a product price is hereinafter referred to as "product price storage area". For product sales, the controller gains access to the product price storage area to acquire a product price, performs payment processing using the product price and performs product delivery arrangement. In addition, the controller, when current time reaches a predetermined discount sales time period, retracts product price information from the product price storage area to another memory are (hereinafter referred to as a "retract area") and updates the product price in the product price storage area to a discount price. Furthermore, the controller, when current time is out of the predetermined discount sales time period, rewrite product price information which have been retracted in the retract area, in the product price storage area of the memory.

However, the conventional automatic vending machine described above has the following problems: The conventional automatic vending machine performs update processing in a product price storage area around a discount sales time period. The product price storage area is an area to be accessed in for product sales. Accordingly, the controller stops product sales control during update processing in the product price storage area for stable sales operation. This causes a problem that there occurs the time during which product sales cannot be made around the discount sales time period. Particularly, use of a storage medium with a low access speed as the retract area will increase sales disable time. Further, data transfer between the product price storage area and the retract area and data updating in the product price storage area occur many times, which will increase a possibility of having a data transfer error or a writing error. This causes the following problem: a possibility of product sales made at an erroneous price may potentially rise.

### Brief summary of the invention

It is an object of the present invention to provide a vending machine capable of discount sales with high stability without missing a chance of product sales.

In order to accomplish the above object, a vending machine according to the present invention includes: a product storage portion for storing a product; a product selection unit for selecting the product; a product delivery device for delivering the product in the product storage portion; and a controller for performing product sales control. The controller includes: a clock unit for measuring current time; a storage unit for storing the usual product price for each product. The controller, when current time measured by the clock unit is within a predetermined time period during product sales, discounts a predetermined amount from the usual product price stored in the storage unit for product sales control.

According to the present invention, no rewriting of product prices stored in the storage unit permits unnecessary time for stopping product sales, which was required to rewrite the product price, thus making it possible to continue product sales even around the discount sales time period. Further, no rewriting of product prices stored in the storage unit can eliminate generation of a data error in rewriting, thereby stably performing product sales.

An example of the preferred embodiments of the present invention is that the storage unit stores, for each product, information indicating whether the product is intended for discount sales and the controller performs discount control only for a product to be discounted. The present invention permits setting of the presence or absence of discount sales for each product, thus providing flexible operation.

Another controller for a vending machine of the present invention, including: a clock unit for measuring a current time; and a storage unit for storing the usual product price and discounted product price for each product, performs product sales control using the usual product price stored in the storage unit when current time measured by the clock unit is not within a predetermined time period during product sales, and performs product sales control using the discounted product price stored in the storage unit when current time measured by the clock unit is within the predetermined time period during product sales.

The present invention requires no rewriting of a product price stored in a storage unit in the same way as the above-described invention. This can eliminate product sails stopping period required to rewrite a product price, thus making it possible to continue product sales even around a discount sales time period. Further, no rewriting of product prices stored in the storage unit can eliminate generation of a data error in rewriting, thereby stably performing product sales.

In performing switching between discount sales and usual sales according to each invention, the following method is optimum: Specifically, the storage unit stores a discount sales flag indicating whether or not discount sales should be made. The controller evaluates whether or not current time measured by the clock unit is within the predetermined time period during sales standby and turns on the discount sales flag when the measured time is within the predetermined time period. Further, the controller evaluates whether the discount sales flag is on or off during product sales and performs switching between discount sales and usual sales.

Other objects, constitutions and advantages of the present invention will become apparent in the following detailed description.

### Brief description of several views of the drawings

FIG. 1 is a front view of a vending machine;
FIG. 2 is a schematic block diagram of a controller according to a first embodiment;
FIG. 3 is a view describing an example of a product price list;
FIG. 4 is a flowchart describing an operation of a vending machine according to the first embodiment;
FIG. 5 is a schematic block diagram of a controller according to a second embodiment;
FIG. 6 is a view describing examples of an usual sales price list and a discount sales price list; and
FIG. 7 is a flowchart describing an operation of a vending machine according to the second embodiment.

### Detailed description of the invention

### (First Embodiment)

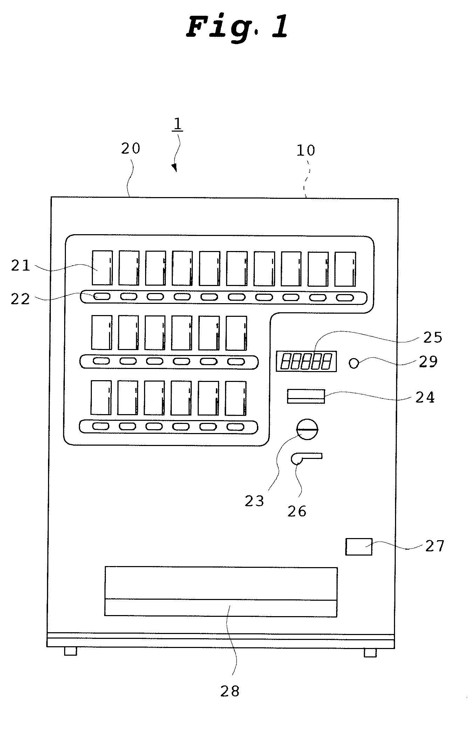

Referring now to drawings, a vending machine according to a first embodiment of the present invention will be described. FIG. 1 is a front view of a vending machine. In the present embodiment, a description will be made on a vending machine with a plurality of meandering product storage columns called serpentine columns among various types of vending machines.

The vending machine 1, as illustrated in FIG. 1, includes: a box-type vending machine body 10 with an open front, having a product storage chamber and a machine chamber therein; an outer door 20 opening and closing the open front of the body 10. On the front face of the outer door 20, there are attached product samples 21, product selection buttons 22, a coin slot 23, a bill slot 24, a display unit 25 displaying an input cash amount or the like, constituted of 7-segment LED and the like, a cash return lever 26, a coin return 27, a product drop chute 28 and a discount sales display lamp 29 displaying whether or not discount sales has been made. Each of the product selection buttons 22 is attached with a sales enable lamp displaying whether or not the product can be sold. Inside the coin slot 24, there is provided a coin processing unit 30 (not illustrated in FIG. 1) for identifying whether an input coin is true or not and a type of the coin. Inside the bill slot 24, there is provided a bill processing unit 40 (not illustrated in FIG. 1) for identifying whether an input bill is true or not and a type of the bill.

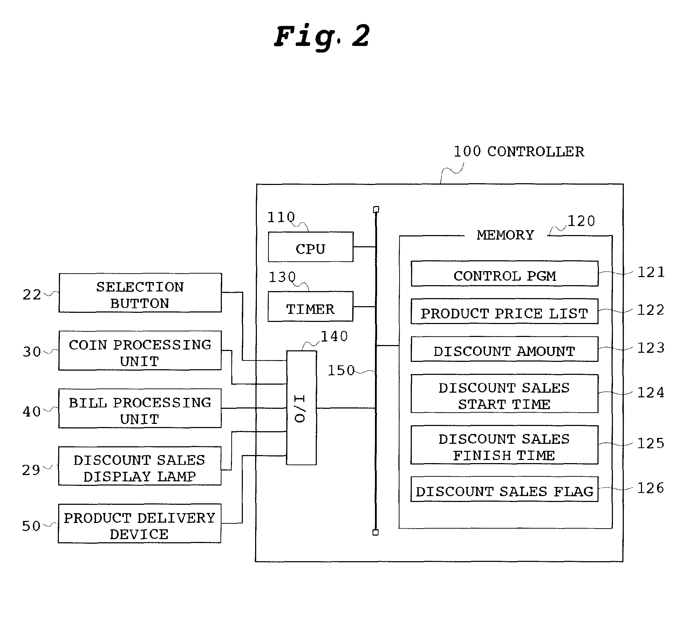

Referring next to FIG. 2, a control system of the vending machine 1 will be described. FIG. 2 is a schematic structural view of a control system of a vending machine. Temperature control of products and the like are the same as in a conventional way. Accordingly, only discount control involving the gist of the present invention will be described.

As illustrated in FIG. 2, the controller 100 includes: a CPU 110 as a main arithmetic unit, a memory 120 as a main storage unit, a timer 130 measuring current time, an I/O interface 140 and a bus 150 for connecting them. The memory 120 stores a control program 121. The controller 100 operates after the CPU 110 executes the control program 121.

The I/O interface 140 of the controller 100 is connected with various types of appliances and units such as the product selection button 22, the coin processing unit 30, the bill processing unit 40, the discount sales display lamp 29 and a product delivery device 50 for delivering products stored in the column.

The memory 120 stores, besides the control program 121, a product price list 122 storing a product price for each column, a discount amount 123 during discount sales, a start time 124 of discount sales, a finish time 125 of discount sales and a discount sales flag 126 for determining whether or not discount sales processing be performed. The product price list 122, the discount amount 123, the discount sales start time 124 and discount sales finish time 125 are previously set to predetermined values.

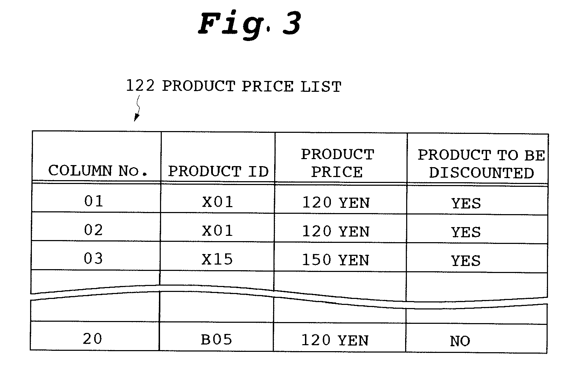

FIG. 3 illustrates an example of the product price list 122. The product price list 122, as illustrated in FIG. 3, stores a column number for identifying each column, a product ID for identifying products stored in the column, a product price of the product and information indicating whether or not the product be set to an object intended for discount sales. The product price is the usual sales price and, during discount sales, an amount obtained by subtracting the discount amount 123 from the product price becomes a sales price.

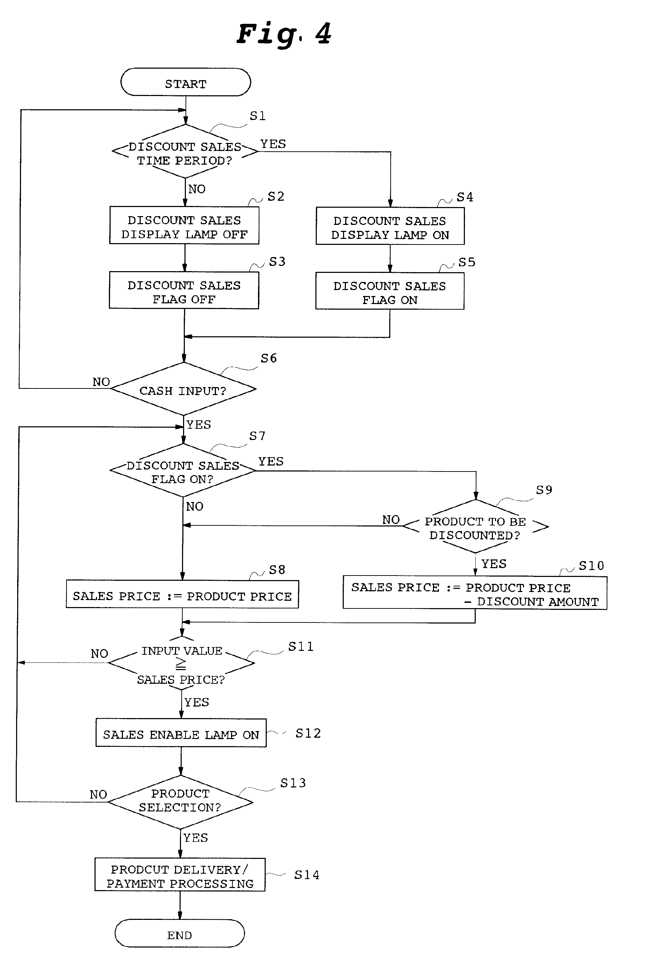

For the vending machine 1 according to the present embodiment, a current time measured by the timer 130 is evaluated and the discount sales flag 126 is set during sales standby. Moreover, sales control is performed so as to set a sales price to the usual price or a discount price based on a value of the discount sales flag 126. Referring next to a flowchart in FIG. 4, a detailed description will be made on the sales control of the vending machine 1.

The controller 100 evaluates whether or not the current time measured by the timer 130 is within a discount sales time period (step S1). Specifically, the controller 100 evaluates whether "Discount sales start time 124 ≤ Current time ≤ Discount sales finish time 125" is satisfied or not. If the current time is not within the discount sales time period (step S1), the controller 100 controls so as to turn off the discount sales display lamp 29 (step S2) and turn off the discount sales flag 126 (step S3). On the other hand, the current time is within the discount sales time period (step S1), the controller 100 controls so as to turn on the discount sales display lamp 29 (step S4) and turn on the discount sales flag 126 (step S5). The above-described processing is performed during sales standby (step S6). In other words, the above-described processing is performed until coin or bill has been input into the coin processing unit 30 or the bill processing unit 40.

The controller 100, upon detecting that coin or bill is in the coin processing unit 30 or the bill processing unit 40 (step S6), determines sales price for each product (column) (steps S7 to S10) and controls lighting of the sales enable lamp of the product selection button 22 for each product (column) (steps S11 and S12). Specifically, when the discount sales flag 126 is OFF (step S7), a sales price is taken as a product price in the product price list 122 (step S8). On the one hand, when a product intended for discount sales in the product price list 122 is "No" (step S9) even if the discount sales flag 126 is ON (step S7), sales price is taken as a product price in the product price list 122 (step S8). On the other hand, when the discount sales flag 126 is ON (step S7) and a product for discount sales in the product price list 122 is "Yes" (step S9), sales price is taken as a price obtained by subtracting a discount amount 123 from a product price in the product price list 122 (step S10). When the value of input money is equal to or higher than a sales price (step S11), the sales enable lamp of the product selection button 22 is lit for the product (column) (step S12).

Next, when the controller 100 detects that any of the product selection buttons 22 of which sales enable lamps are on has been depressed (step S13), a product corresponding to the product selection button 22 is controlled so as to be delivered by the product delivery device 50 and payment processing is performed with the coin processing unit 30 or the bill processing unit 40 (step S14).

Such processing, when current time is within a discount sales time period, turns on the discount sales display lamp 29 and performs discount sales. On the other hand, when the current time is out of the discount sales time period, the discount sales display lamp 29 turns off and a sales is made at the usual price.

As described above, the vending machine 1 according to the present embodiment will not update the product price list 122 on the memory 120 around a discount sales time period, thereby attaining continuous sales processing and stable operation.

### (Second Embodiment)

Referring next to drawings, a vending machine according to a second embodiment of the present invention will be described. A difference of the vending machine according to the present embodiment from that of the first embodiment lies in a data structure of product prices and discount prices stored in the memory 120. Accordingly, the controller 100 operates in a different way. Other points are the same as in the first embodiment, therefore, only different points are described herein.

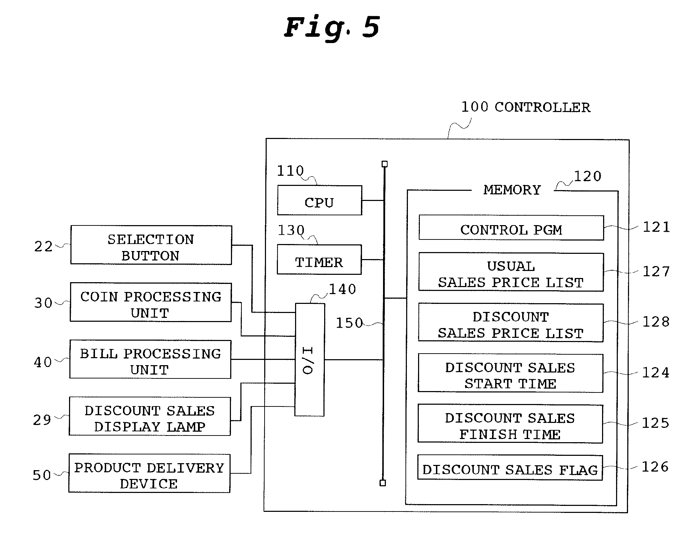

The memory 120, as illustrated in FIG. 5, stores the usual sales price list 127 storing product sales prices during the usual sales and a discount sales price list 128 storing product sales prices during discount sales in place of the product price list 122 and the discount amount 123 in the first embodiment.

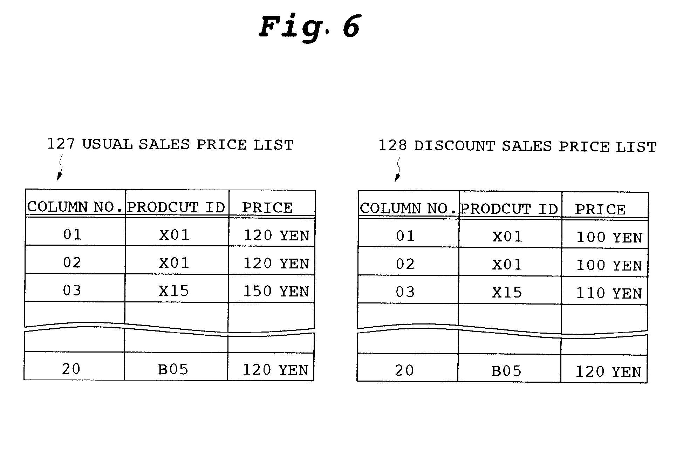

FIG. 6 illustrates examples of the usual sales price list 127 and the discount sales price list 128. As illustrated in FIG. 6, the usual sales price list 127 and the discount sales price list 128 have the same data structure. Each of the usual sales price list 127 and the discount sales price list 128 stores a column number for identifying each column, product IDs for identifying products stored in the each column and sales prices of the products. Different values between the usual sales price list 127 and the discount sales price list 128 are about sales prices. However, on products not intended for discount sales, sales prices of the usual sales price list 127 and those of the discount sales price list 128 are the same.

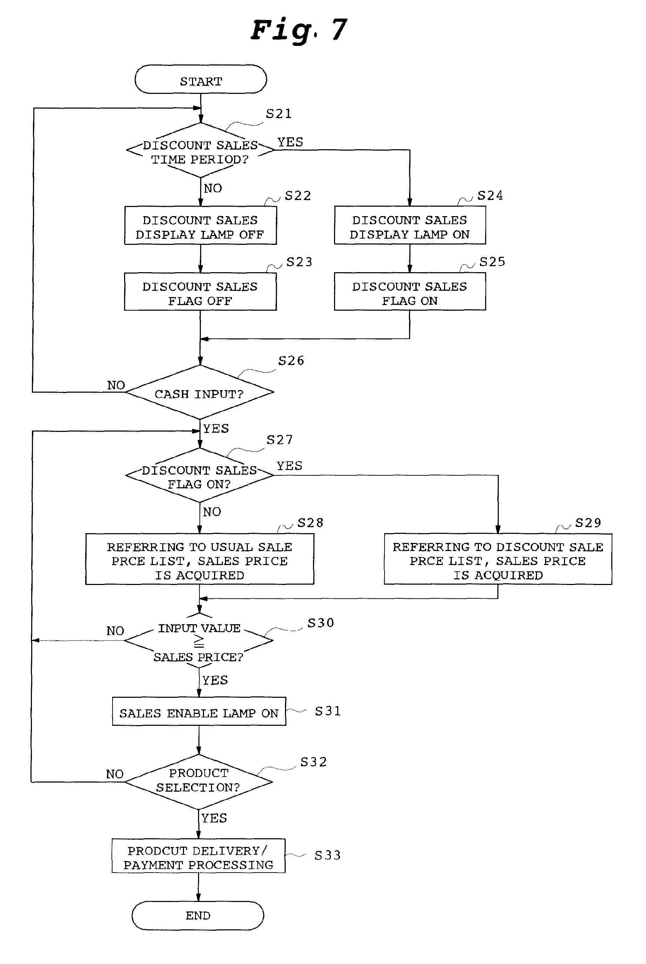

Referring next to a flowchart in FIG. 7, a detailed description will be made on the sales control of the vending machine 1.

The controller 100 evaluates whether or not a current time measured by the timer 130 is within a discount sales time period (step S21). Specifically, the controller 100 evaluates whether "Discount sales start time 124 ≤ Current time ≤ Discount sales finish time 125" is satisfied or not. If the current time is not within the discount sales time period (step S21), the controller 100 controls so as to turn off the discount sales display lamp 29 (step S22) and turn off the discount sales flag 126 (step S23). On the other hand, the current time is within the discount sales time period (step S21), the controller 100 controls so as to turn on the discount sales display lamp 29 (step S24) and turn on the discount sales flag 126 (step S25). In other words, the above-described processing is performed until coin or bill has been input into the coin processing unit 30 or the bill processing unit 40 during sales standby (step S26). The above-described steps are the same as in the first embodiment.

The controller 100, upon detecting that coin or bill is input into the coin processing unit 30 or the bill processing unit 40 (step S26) acquires sales price for each product (column) (steps S27 to S29) and controls lighting of the sales enable lamp of the product selection button 22 for each product (column) (steps S30 and S31). Specifically, when the discount sales flag 126 is OFF (step S27), a sales price is acquired from the usual sales price list 127 (step S28). When the discount sales flag 126 is ON (step S27), a sales price is acquired from the discount sales price list 128 (step S29). When the value of input money is equal to or higher than a sales price (step S30), the sales enable lamp of the product selection button 22 is lit for the product (column) (step S31).

Next, when the controller 100 detects that any of the product selection buttons 22 of which sales enable lamps are on has been depressed (step S32), a product corresponding to the product selection button 22 is controlled so as to be delivered by the product delivery device 50 and payment processing is performed with the coin processing unit 30 or the bill processing unit 40 (step S33).

Such processing, when current time is within a discount sales time period, turns on the discount sales display lamp 29 and performs discount sales. On the other hand, when the current time is out of the discount sales time period, the discount sales display lamp 29 is turned off and a sales is made at the usual price.

As described above, the vending machine 1 according to the present embodiment will not update the product price list 122 on the memory 120 around a discount sales time period as in the first embodiment, thereby attaining continuous sales processing and stable operation. Further, the present embodiment permits a discount amount during discount sales to be set for each product, thus enabling flexible operation.

The embodiments of the present invention are detailed above, but the present invention is not limited thereto. For example, in the aforementioned embodiments, lighting of the discount sales display lamp 29 indicates that discount sales is in action, but the indication may be made in other ways. For example, a sales price after discount may be displayed on the display unit 25 when the product selection button 22 is depressed.

Further, in the above-described embodiments, product sales payment is made by coin or bill, which may be by digital cash or credit card as well. In this case, it is sufficient to separately provide an applicable device such as a card reader.

## Claims

1. A vending machine (1) comprising:
a product storage portion for storing a product;
a product selection unit (22) for selecting the product;
a product delivery device (50) for delivering the product in the product storage portion; and
a controller (100) for performing product sales control, wherein
the controller (100) includes a clock unit (130) for measuring current time and a storage unit (120) for storing the usual product price (122) for each product and discounts a predetermined amount (123) from the usual product price (122) stored in the storage unit (120) for product sales control when current time measured by the clock unit (130) is within a predetermined time period (124, 125) during product sales.

2. The vending machine (1) according to claim 1, wherein
the storage unit (120) stores, for each product, information indicating whether the product is intended for discount sales and
the controller (100) performs discount control only for a product to be discounted.

3. The vending machine (1) according to claims 1 and 2, wherein
the storage unit (120) stores a discount sales flag (126) indicating whether or not discount sales should be made, and
the controller (100) evaluates whether or not current time measured by the clock unit (130) is within the predetermined time period (124, 125) during sales standby, turns on the discount sales flag (126) when the measured time is within the predetermined time period (124, 125), evaluates the discount sales flag during product sales, and performs discount control when the discount sales flag (126) is on.

4. A vending machine (1) comprising:
a product storage portion for storing a product;
a product selection unit (22) for selecting the product;
a product delivery device (50) for delivering the product in the product storage portion; and
a controller (100) for performing product sales control, wherein
the controller, comprising a clock unit (130) for measuring a current time and a storage unit (120) for storing the usual product price (127) and discounted product price (128) for each product, performs product sales control using the usual product price (127) stored in the storage unit (120) when current time measured by the clock unit (130) is not within a predetermined time period (124, 125) during product sales, while when current time measured by the clock unit (130) is within the predetermined time period (124, 125) during product sales, the controller (100) performs product sales control using the discounted product price (128) stored in the storage unit (120).

5. The vending machine (1) according to claim 4, wherein
the storage unit (120) stores a discount sales flag (126) indicating whether or not discount sales should be made, and
the controller (100) evaluates whether or not current time measured by the clock unit (130) is within the predetermined time period (124, 125) during sales standby, turns on the discount sales flag (126) when the measured time is within the predetermined time period (124, 125), evaluates the discount sales flag (126) during product sales, and performs product sales control using the usual product price (127) when the discount sales flag (126) is off, while when the discount sales flag (126) is on, the controller (100) performs product sales control using the discounted product price (128).
